# EUROPÄISCHE PATENTANMELDUNG

(11) **EP 0 799 733 A2**
(43) Veröffentlichungstag der Anmeldung: **08.10.1997**
(21) Anmeldenummer: 96119927.0
(22) Anmeldetag: 12.12.1996
(51) Int. Cl.: B60H 1/00

(54) **Heizungs- oder Klimaanlage für ein Kraftfahrzeug**

(30) Priorität: 03.04.1996 DE 19613344
(71) Anmelder: Behr GmbH & Co., 70469 Stuttgart (DE)
(72) Erfinder: Bendell, Ian, 71297 Mönsheim (DE)
(74) Vertreter: Heumann, Christian

(57) **Zusammenfassung**

Mit der Erfindung soll eine Heizungs- oder Klimaalage geschaffen werden, die einen verringerten Energiebedarf gewährleistet und gleichzeitig ausreichend trockene Luft der Defrosterdüse zur Verfügung stellt, damit ein Beschlagen der Windschutzscheibe wirksam verhindert wird.

Erfindungsgemäß weist die Heizungs- oder Klimaanlage zwei getrennte Luftführungskanäle auf, wobei der erste Luftführungskanal (24) Frischluft und der zweite Luftführungskanal (27) Umluft führt. Je nach den Umgebungsbedingungen wird gewährleistet, daß jeweils trockene, erwärmte Luft der Defrosterdüse (45) zugeleitet wird.

Die Erfindung findet in der Kraftfahrzeugtechnik Anwendung.

## Beschreibung

Die Erfindung betrifft eine Heizungs- oder Klimaanlage für ein Kraftfahrzeug nach dem Oberbegriff des Patentanspruchs 1.

Aus der **DE 39 11 616 C2** ist eine Heizungs- oder Klimaanlage für ein Kraftfahrzeug mit einem Gehäuse bekannt, in dem zwei voneinander getrennt angeordnete Kanäle zur Führung von Kalt- und Warmluft ausgebildet sind. Über eine Steuerklappe am Eingang des Gehäuses läßt sich die jeweils den Kanälen zugeführte Luftmenge einstellen. In einer am Ausgang des Gehäuses angeordneten Mischluftkammer können dann die unterschiedlich temperierten Teilströme miteinander gemischt und den jeweiligen Austrittsdüsen zugeleitet werden. Nachteilig an der bekannten Anlage ist, daß sie auf die Temperierung von Frischluft beschränkt ist.

Der Erfindung liegt die Aufgabe zugrunde, eine Heizungs- oder Klimaanlage derart auszubilden, daß auf einfache und platzsparende Weise eine Verringerung des Energiebedarfs für eine Heizungs- oder Klimaanlage erzielt wird und gleichzeitig eine Bereitstellung von ausreichend trockener Luft für die Defrosterdüse ermöglicht wird, so daß das Beschlagen der Windschutzscheibe wirksam verhindert wird.

Die der Erfindung zugrunde liegende Aufgabe wird durch die Merkmale des Patentanspruchs 1 gelöst. Die erfindungsgemäße Anlage weist mindestens zwei getrennte Luftführungskanäle auf, wobei ein erster Luftführungskanal zur Führung von Frischluft und eine zweiter Luftführungskanal zur Führung von Umluft vorgesehen ist. Hierdurch wird eine unabhängige wärmetechnische Behandlung der Frischluft einerseits und der Umluft andererseits gewährleistet. Zum einen kann an den entsprechenden Ausgangsstutzen Frisch- und Umluft von unterschiedlicher Temperatur und unterschiedlichem Feuchtegrad getrennt bereitgestellt werden. Dabei wird der Feuchtegrad der Luft von den Umgebungsbedingungen bzw. den Bedingungen im Fahrzeuginnenraum bestimmt. Beispielsweise ist die Frischluft an kalten niederschlagsfreien Wintertagen trocken, während die aus dem Fahrzeuginnenraum zugeführte Umluft relativ feucht ist. So könnte beispielsweise der Defrosterdüse trockene und gegebenenfalls erwärmte Frischluft zur Verfügung gestellt werden, die das Beschlagen der Windschutzscheibe wirksam verhindert, wohingegen den Mittel-, Seiten- und Fußraumdüsen die bereits im Fahrzeuginnenraum erwärmte eventuell feuchtere Umluft zugeführt wird. Zum anderen ist die erfindungsgemäße Anlage auch geeignet, den entsprechenden Ausgangsstutzen Frisch- und Umluft in einem bestimmten vorgegebenen Mischungsverhältnis bereitzustellen. Die Erfindung ermöglicht daher, den jeweiligen Ausgangsstutzen getrennt Luft unterschiedlicher Temperatur einerseits und unterschiedlichen Feuchtegrades andererseits zuzuführen.

Nach einer vorteilhaften Weiterbildung der Erfindung besteht das Gehäuse der erfindungsgemäßen Anlage aus einem Gebläse-Segment und aus einem Wärmeübertrager-Segment, in denen Trennwände vorgesehen sind zur Ausbildung eines Frischluft- und eines Umluftkanals. Diese Trennwände sind einstückig mit den entsprechenden Segmenten verbunden.

In Ausgestaltung der Erfindung weist das Gebläse-Segment Gebläsewandungen als U-Profile auf, die kreisbogenförmig korrespondierend zu einem Laufrad angeordnet sind und sich spiralförmig zu einem Anschlußstutzen des benachbarten Wärmeübertrager-Segments erweitern. Das Laufrad ist einstückig ausgebildet, wobei zwei Radiallaufräder durch eine durchgehende Verbindungswand miteinander verbunden sind. Die U-Profile und das Laufrad sind koaxial zueinander angeordnet, wobei das Laufrad eine Bohrung zur Aufnahme der Antriebswelle eines Gebläsemotors aufweist.

Vorteilhafterweise weist der Umluftkanal innerhalb des Wärmeübertrager-Abschnitts einen Bypasskanal auf, durch den ein Teilstrom an dem Heizkörper vorbeigeleitet wird. Durch die Stellung einer beispielsweise am Eingang des Bypasskanals angeordneten Steuerklappe läßt sich auf einfache Weise eine Temperatursteuerung der im Umluftkanal strömenden Luft verwirklichen. Die Luft des Umluftkanals kann somit einerseits durch Stellung der Steuerklappe und andererseits durch Stellung eines Heizkörperventils gesteuert werden.

Nach einer vorteilhaften Weiterbildung der Erfindung wird durch das Vorsehen jeweils einer Steuerklappe für den Frischluft- und den Umluftkanal eingangsseitig der Anlage eine Mischung von Frisch- und Umluft gewährleistet. Dabei kann durch entsprechende Stellung der Steuerklappen das Mischungsverhältnis zwischen Frisch- und Umluft sowohl in dem Frischluft- als auch in dem Umluftkanal reguliert werden. Es ergibt sich somit eine bedarfsgerechte und vielseitige Anwendung der erfindungsgemäßen Anlage.

Nach einer Weiterbildung der Erfindung ist die Anlage in Modulbauweise zusammengesetzt. Feder/Nut-Verbindungen zwischen den einzelnen Gehäusewänden ermöglichen einen schnellen und dichten Zusammenbau. Durch den symmetrischen Aufbau des Gebläse-Segments ist die Anlage ohne zusätzliche Maßnahmen geeignet, sowohl in einem Fahrzeug mit einem auf der linken Seite angeordneten Lenkrad als auch in einem Fahrzeug mit einem auf der rechten Seite angeordneten Lenkrad eingesetzt zu werden. Dazu muß lediglich das Gebläse-Segment auf der gegenüberliegenden Seite der Längsebene des Wärmeübertrager-Segments an demselben arretiert werden.

Ein Ausführungsbeispiel der Erfindung wird nachfolgend anhand der Zeichnungen näher erläutert.

Es zeigen:
- **Fig. 1**: einen Teillängsschnitt der erfindungsgemäßen Anlage;
- **Fig. 2**: einen Längsschnitt der erfindungsgemäßen Anlage entlang der Schnittlinie I-I in Fig. 1 und

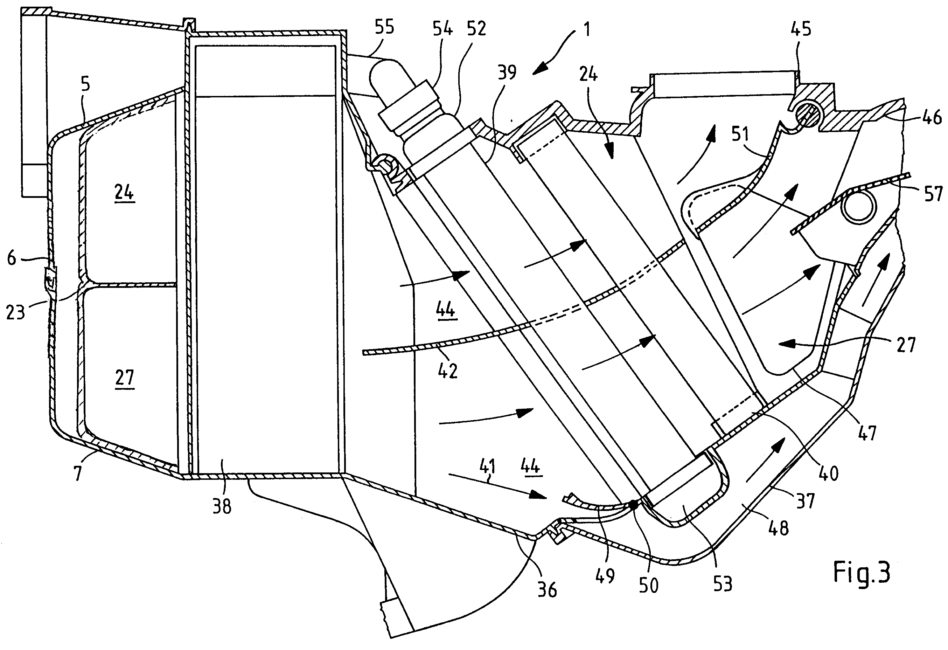

- **Fig. 3**: einen Schnitt der erfindungsgemäßen Anlage entlang der Linie II-II in Fig. 2.

Im folgenden wird als Ausführungsbeispiel der Erfindung eine Klimaanlage zur Klimatisierung des Fahrzeuginnenraums eines Kraftfahrzeugs beschrieben. Alternativ kann diese Anlage unter Weglassung des Verdampfers als Heizungsanlage ausgebildet sein.

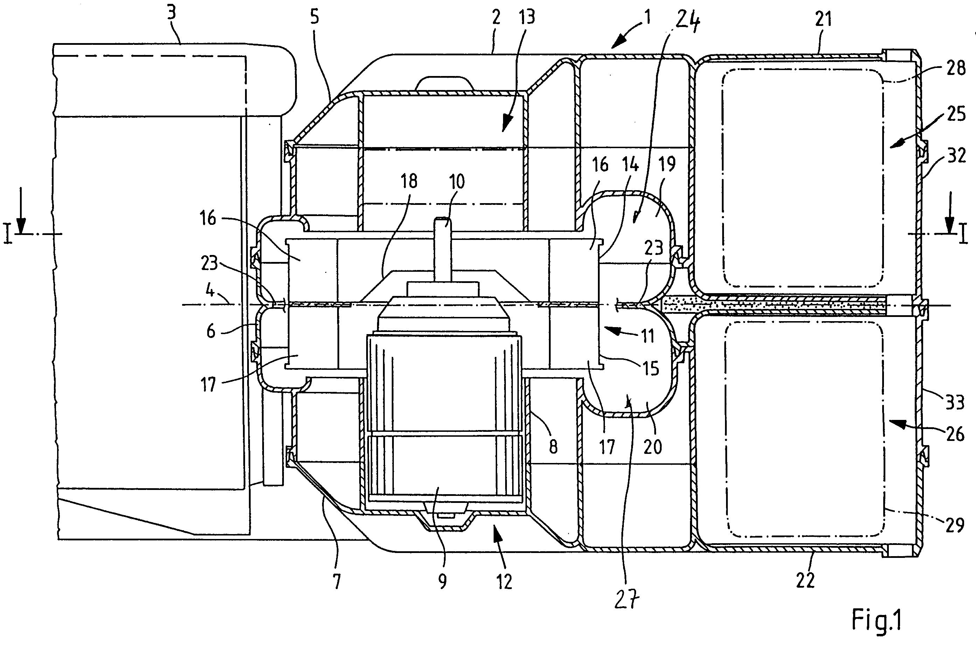

Die in **Fig. 1** im Längsschnitt dargestellte Klimaanlage besteht aus einem Gehäuse 1 mit einem Gebläse-Segment 2 und einem Wärmeübertrager-Segment 3. Das Gebläse-Segment 2 ist bzgl. einer Mittelebene 4 symmetrisch aufgebaut. Das Gebläse-Segment 2 weist einen oberen, einem mittleren und einen unteren Gebläsewand-Abschnitt 5, 6 und 7 auf. Der untere Gebläsewand-Abschnitt 7 weist eine mit einer zylinderförmigen Wandung versehene Aufnahmetasche 8 zur Aufnahme eines Gebläsemotors 9 auf. Der in der Aufnahmetasche 8 gelagerte Gebläsemotor 9 weist eine Antriebswelle 10 auf, mit der ein Laufrad 11 drehfest verbunden ist. Das so gebildete Gebläse 12 kann wahlweise in der Aufnahmetasche 8 des unteren Gebläsewand-Abschnitts 7 oder in einer Aufnahmetasche 13 des oberen Gebläsewand-Abschnitts 5 gelagert sein.

Das Laufrad 11 besteht aus einem ersten und zweiten Radiallaufrad 14 und 15 mit Schaufeln 16 bzw. 17, wobei die Radiallaufräder 14 und 15 eine gemeinsame Verbindungswand 18 aufweisen. Die Radiallaufräder 14, 15 sind bezüglich der Mittelebene 4 symmetrisch angeordnet, wobei das erste Radiallaufrad 14 einer Frischluftkammer 19 und das zweite Radiallaufrad 15 einer Umluftkammer 20 zugeordnet ist. Die Frischluftkammer 19 und die Umluftkammer 20 sind symmetrisch bezüglich der Mittelebene 4 angeordnet und weisen jeweils als U-Profile ausgebildete, zu den jeweiligen Radiallaufrädern 14 und 15 korrespondierende Gebläsewandungen auf. Diese Gebläsewandungen werden aus einem mittleren Gebläsewand-Abschnitt 6 und jeweils einem sich an diesem nach oben und unten anschließenden Gebläsewand-Abschnitt 5 und 7 gebildet. Die Gebläsewand-Abschnitte 5, 6 und 7 sind durch eine Feder/Nut-Verbindung formschlüssig miteinander verbunden, wobei hervorstehende Nasen des Gebläsewand-Abschnitts 5, 6 oder 7 in dazu korrespondierende Aussparungen des zu verbindenden Gebläsewand-Abschnitts 5, 6 oder 7 eingreifen. Alternativ können die durch die Gebläsewand-Abschnitte 5, 6 oder 7 gebildete Gebläsewandungen auch einstückig ausgebildet sein. Diese Gebläsewandungen würden dann, wie nach dem vorliegenden Ausführungsbeispiel, durch Feder/Nut-Verbindung mit einer oberen Außenwandung 21 und einer unteren Außenwandung 22 verbunden sein. Hierdurch könnte das Gebläse-Segment 2 aus weniger Bauteilen zusammengesetzt werden.

Im Bereich der Mittelebene 4 weist der mittlere Gebläse-Abschnitt 6 eine radial nach innen ragende Trennwand 23 auf, die sich in einer gemeinsamen Ebene mit der Verbindungswand 18 des Laufrads 11 erstreckt, und zwar bis in die Nähe der Außenkontur des Laufrads 11, so daß die Frischluftkammer 19 und die Umluftkammer 20 während des Gebläsebetriebs im wesentlichen luftdicht voneinander abgeschlossen sind. Da die Verbindungswand 18 des Laufrads 11 als durchgehende, geschlossene Wand ausgebildet ist, kann im Bereich des Laufrads 11 kein Austausch zwischen den jeweils in die Kammern 19, 20 angesaugten Luftströme erfolgen.

Zur Bereitstellung der getrennten Luftstromführung ist in dem Gebläse-Segment 2 ein Frischluftkanal 24 ausgebildet, der sich von einem Frischluft-Eingangsstutzen 25 zu der Frischluftkammer 19 und von da aus durch das Wärmeübertrager-Segment 3 an mindestens einen Ausgangsstutzen erstreckt. Auf der gegenüberliegenden Seite von dem Frischluft-Eingangsstutzen 25 ist ein Umluft-Eingangsstutzen 26 angeordnet, durch den vom Gebläse 12 Umluft aus dem Fahrzeuginnenraum über einen Umluftkanal 27 angesaugt wird. Der Umluft-Eingangsstutzen 26 ist in einem unteren Bereich des Gebläse-Segments 2 angeordnet, während der Frischluft-Eingangsstutzen in einem oberen Bereich des Gebläse-Segments 2 angeordnet ist. Diese Bereiche korrespondieren zu der Frischluftkammer 19 bzw. Umluftkammer 20, in denen die Frischluft bzw. Umluft getrennt angesaugt und dem Wärmeübertrager-Segment 3 zur getrennten Weiterbehandlung zur Verfügung gestellt wird. Dem Frischluft-Eingangsstutzen 25 ist eine Frischluft-Steuerklappe 28 zugeordnet, mittels der die angesaugte Frischluftmenge gesteuert werden kann. Dem Umluft-Eingangsstutzen 26 ist eine Umluft-Steuerklappe 29 zugeordnet, die zusammen mit der Frischluft-Steuerklappe 28 auf einer gemeinsamen Drehachse 30 drehbar gelagert ist. Die Frischluft-Steuerklappe 28 und die Umluft-Steuerklappe 29 sind bezüglich der Drehachse 30 in einem kleinen Winkelbereich beweglich gelagert, so daß eine geringe Abweichung in der Winkelstellung möglich ist. Plötzlich auftretende Druckdifferenzen zwischen dem Frischluftstrom und dem Umluftstrom können sich daher nicht störend auf den Gleichlauf des Gebläsemotors 9 auswirken.

Die Steuerklappen 28 und 29 sind getrennt steuerbar. In einer Schließstellung liegt die Frischluft-Steuerklappe 28 bzw. die Umluft-Steuerklappe 29 senkrecht zu der von dem Frischluft-Eingangsstutzen 25 bzw. Umluft-Eingangsstutzen 26 vorgegebenen Luftströmungsrichtung jeweils an dem Eingangsstutzen 25 bzw. 26 an, so daß keine Frischluft bzw. Umluft in das Gebläse-Segment 2 angesaugt werden kann. In einer Öffnungsstellung erstrecken sich die Klappen 28 und 29 in einer entgegengesetzten Endlage, wobei sie an der gegegenüberliegenden Außenwand innenseitig zur Anlage kommen, so daß jeweils ein maximaler Luftstrom in die Frischluftkammer 19 bzw. Umluftkammer 20 angesaugt werden kann. Auf diese Weise kann die dem Frischluftkanal 24 und dem Umluftkanal 27 zugeführte Luftmenge gesteuert werden, ohne daß ein Austausch von Frischluft und Umluft eintritt.

Alternativ können jeweils der Frischluft-Steuerklappe 28 und der Umluftsteuerklappe 29 ein Frischluft-Eingangsstutzen 25 und ein in gleicher Höhe angeordneter Umluft-Eingangsstutzen 26 zugeordnet sein, so daß je nach Stellung der Steuerklappe 28, 29 eine Mischung von Frisch- und Umluft am Eingang des Gehäuses 1 erfolgen kann. In einer mittleren Öffnungsstellung der Frischluft-Steuerklappe 28 bzw. der Umluft-Steuerklappe 29, in der sich diese als Verlängerung eines radial zur Drehachse des Gebläses 12 angeordneten Luftleitelements 31 erstrecken, würde beispielsweise ausschließlich Frischluft sowohl dem Frischluftkanal 24 als auch dem Umluftkanal 27 zugeführt werden. In einer Stellung der Steuerklappe 28, 29, in der die Steuerklappe 28, 29 von der mittleren Öffnungsstellung hin zu dem Frischluft-Eingangsstutzen 25 gerichtet ist, wird ein Mischstrom aus Frischluft und Umluft dem jeweiligen Kanal zugeleitet. Vorzugsweise ist nur an dem Eingang des Frischluftkanals 24 die Möglichkeit der Beimischung von Umluft vorgesehen, wobei in Abhängigkeit von der Stellung der Frischluft-Steuerklappe 28 zwischen der mittleren Öffnungsstellung und der Schließstellung der Anteil der Umluft erhöht werden kann. Vorteilhafterweise kann eine Zwischenstellung der Steuerklappe 28 eingestellt, bei der das Verhältnis von Frischluft zu Umluft etwa bei 40:60 bzw. 30:70 liegt.

Zur Ausbildung des Frischluft-Eingangsstutzens 25 und des Umluft-Eingangsstutzens 26 ist die obere Außenwandung 21 und die untere Außenwandung 22 jeweils mit einer oberen Ansatzwandung 32 bzw. unteren Ansatzwandung 33 durch Feder/Nut-Verbindung verbunden. Zur Schließung der oberen Hälfte des Gebläse-Segments 2 mit der unteren Hälfte desselben ist die obere Ansatzwandung 32 mit der unteren Ansatzwandung 33 formschlüssig verbunden.

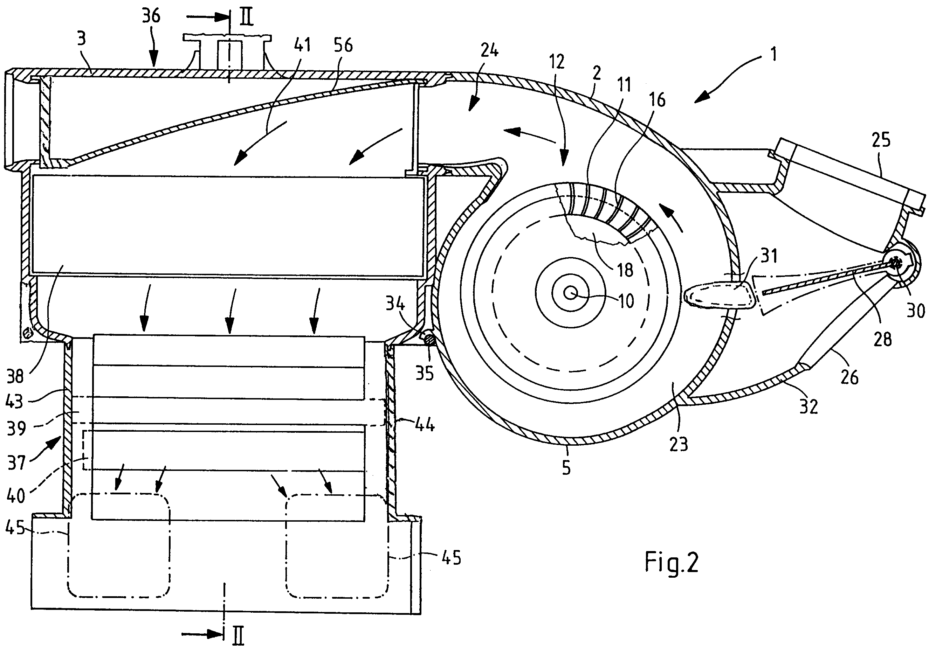

Wie sich aus Figur 2 besonders gut ersehen läßt, ist das Gebläse-Segment 2 mittels einer abgerundeten Nase 34 an einem zylindrischen Fortsatz 35 des Wärmeübertrager-Segments 3 angelenkt. Auf einfache Weise kann so das Gebläse-Segment 2 an das Wärmeübertrager-Segment 3 unter Anlage der Nase 34 an die Mantelfläche des Fortsatzes 35 eingehängt und verschwenkt werden, bis die beiden Segmente 2 und 3 im gegenüberliegenden Auslaßbereich des Gebläse-Segments 2 miteinander zur Anlage kommen und durch Feder/Nut-Verbindung fest miteinander arretiert sind.

Das Wärmeübertrager-Segment 3 besteht aus mehreren Gehäuseabschnitten 36 und 37, die mittels einer Feder/Nut-Verbindung zusammengesetzt sind. Alternativ kann das Wärmeübertrager-Segment 3 auch einstückig ausgebildet sein. In dem Wärmeübertrager-Segment 3 sind in Strömungsrichtung ein Verdampfer 38, ein Heizungswärmeübertrager 39 und ein PTC-Heizkörper 40 eingefaßt. Quer zur Strömungsrichtung, die mit Pfeilen 41 gekennzeichnet ist, erstreckt sich eine Trennwand 42 von einer Seitenwandung 43 zu einer gegenüberliegenden Seitenwandung 44 des Wärmeübertrager-Segments. Diese Trennwand 42 dient als Luftleitelement für die dem Wärmeübertrager-Segment 3 getrennt zugeführten Frischluft- und Umluftströme und bildet somit in Fortsetzung zu dem Gebläse-Segment 2 den Frischluftkanal 24 und den Umluftkanal 27 aus. Auf diese Weise wird wirksam eine Durchmischung von Frischluft und Umluft innerhalb des Gehäuses 1 weitgehend vermieden. Die von dem Gebläse 12 getrennt angesaugte Frischluft bzw. Umluft wird somit getrennt voneinander in dem Frischluftkanal 24 und dem Umluftkanal 27 geführt und kann in dem Wärmeübertrager-Segment 3 einer unterschiedlichen Wärmebehandlung ausgesetzt sein. Zu diesem Zweck ist der PTC-Heizkörper 40 als zweigeteilter Heizkörper ausgebildet, wobei ein erster Teil dem Frischluftkanal 24 und ein zweiter Teil dem Umluftkanal 27 zugeordnet ist. Durch unterschiedliche Heizleistung derselben Teile kann ein unterschiedliches Temperaturprofil des Frischluftstroms einerseits und des Umluftstroms andererseits erzielt werden. Je nach Anforderung des Benutzers kann somit beim Starten des Fahrzeugs die trockene Frischluft mit einer vorgegebenen Temperatur einem Defroster-Ausgangsstutzen 45 zur Weiterleitung an eine Defrosterdüse (nicht dargestellt) zugeführt werden. Die auf eine gewünschte Temperatur gebrachte Umluft wird am Ausgang des Umluftkanals 27 einem Ausgangsstutzen 46, der mit nicht dargestellten Mitteldüsen und Seitendüsen in Verbindung steht, und einem Fußraum-Ausgangsstutzen 47, der mit einer Fußraumdüse in Verbindung steht, zugeführt. Außenseitig neben dem Umluftkanal 27 erstreckt sich ein Bypasskanal 48, an dessen Eingang eine Steuerklappe 49 drehbar um eine Schwenkachse 50 gelagert ist, wobei je nach Stellung der Steuerklappe 49 ein mehr oder weniger großer Teilstrom der Umluft an dem Heizungswärmeübertrager 39 und dem PTC-Heizkörper 40 herumgeleitet wird. Der somit kühle, durch den Bypasskanal 48 geleitete Luftstrom wird ausgangsseitig dem Ausgangsstutzen 46 zugeführt.

Vorzugsweise ist ausgangsseitig in Verlängerung der Trennwand 42 ein Luftleitelement 51 angeordnet, das bei Verstellung aus der Mittelstellung in Richtung des Frischluftkanals 24 oder des Umluftkanals 27 ein Teilstrom der Frischluft dem Ausgangsstutzen 46 oder dem Fußraum-Ausgangsstutzen 47 bzw. ein Teilstrom der Umluft dem Defroster-Ausgangsstutzen 45 zuführt. Auf diese Weise läßt sich auch ausgangsseitig eine begrenzte Vermischung von Frischluft und Umluft erreichen, so daß beispielsweise an extrem kalten Wintertagen beim Starten des Fahrzeugs eine durch Sonnenstrahlung im Fahrzeuginnenraum erhitzte Umluft zur Vermeidung des Beschlagens der Windschutzscheibe dem Defroster-Ausgangsstutzen 45 zugeführt werden kann.

Der Heizungswärmeübertrager 39 weist einen oberen Wasserkasten 52 und einen unteren Wasserkasten 53 auf. An dem oberen Wasserkasten 52 befinden sich Aufnahmestutzen 54 zur Aufnahme und Befestigung von Anschlußrohren 55, durch die das Heizmedium dem Heizungs-Wärmeübertrager 39 zugeleitet wird.

Eingangsseitig des Wärmeübertrager-Segments 3 ist ein bogenförmiges Luftleitelement 56 angeordnet, das sich im wesentlichen diagonal in Verlängerung des nach außen weisenden Gebläsewand-Abschnitts 5, 7 von einem Eckbereich der Seitenwandung 44 zu der gegenüberliegenden Seitenwandung 43 erstreckt. Durch die gleichmäßige, bogenförmige Ausbildung des Luftleitelements 56 wird die Frischluft in dem Frischluftkanal 24 und die Umluft in dem Umluftkanal 27 im wesentlichen frei von Verwirbelungen dem Verdampfer 38 zugeleitet und eine gleichmässige Durchströmung des Verdampfers 38 ermöglicht.

Vorteilhafterweise weist der Umluftkanal 27 in dem Bereich der Umluftkammer 20 einen Feuchtesensor auf, der mit einer ebenfalls nicht dargestellten Sensorschaltung verbunden ist. Diese Steuerschaltung verarbeitet die von dem Feuchtesensor gelieferten Meßdaten des Umluftkanals 27 und die von einem in dem Bereich der Frischluftkammer 19 angeordneten Temperatursensor gelieferten Meßdaten und schaltet das Gebläse 12 ein, sobald das Meßsignal des Temperatursensors unter einen vorgegebenen Temperaturschwellwert sinkt und das Meßsignal des Feuchtesensors über einen vorgegebenen Feuchteschwellwert steigt. Dadurch wird beispielsweise bei winterlichen Umgebungsbedingungen (-20°C trockene Außenluft und +20°C feuchte Innenluft) eine Vereisung der Schaufeln 16, 17 verhindert. Nach Abstellen des Fahrzeugmotors bewirkt die Steuerschaltung, daß die Frischluft-Steuerklappe 28 und die Umluft-Steuerklappe 29 in eine Stellung gebracht werden, in der ausschließlich Frischluft angesaugt wird. Durch ein auf ca. ein bis zwei Minuten eingestelltes Zeitglied wird das Gebläse nach maximal zwei Minuten abgeschaltet, wobei annähernd die Temperaturdifferenz zwischen Außenluft und Innenluft ausgeglichen ist.

Nachdem das Gehäuse 1 durch Zusammensetzen der Gehäusewände des Gebläse-Segments 2 und des Wärmeübertrager-Segments 3 formschlüssig durch jeweilige Feder/Nut-Verbindungen gebildet ist, werden die Segmente 2 und 3 jeweils miteinander durch nicht dargestellte Rastverbindungen kraftschlüssig zusammengehalten. Die einzelnen Gehäusewände werden vorzugsweise als Spritzgußteile aus Kunststoff hergestellt.

## Patentansprüche

1. Heizungs- oder Klimaanlage für ein Kraftfahrzeug
- mit einem in einem Gehäuse (1) angeordneten Gebläse (12) und mindestens einem im Luftstrom dem Gebläse (12) nachgeordneten Heizungswärmeübertrager (39),
- mit mehren an dem Gehäuse (1) angeordneten Ausgangsstutzen (45, 46, 47) zur Weiterleitung des Luftstroms an mit dem Fahrzeuginnenraum in Verbindung stehenden Auslaßdüsen,
- mit mindestens zwei in dem Gehäuse (1) voneinander getrennt angeordneten Kanälen (24, 27) zur Führung jeweils eines Luftstroms,
- mit einem Frischluft-Eingangsstutzen (25) für die Zufuhr von Frischluft, **dadurch gekennzeichnet**,
- daß zusätzlich ein Umluft-Eingangsstutzen (26) zur Ansaugung von Umluft vorgesehen ist,
- daß der erste Luftführungskanal als Frischluftkanal (24) ausgebildet ist zur Führung der Frischluft von dem Frischluft-Eingangsstutzen (25) zu mindestens einem Ausgangsstutzen (Defroster-Ausgangsstutzen 45), und daß der zweite Luftführungskanal als Umluftkanal (27) ausgebildet ist zur Führung der Umluft von dem Umluft-Eingangsstutzen (26) zu mindestens einem weiteren Ausgangsstutzen (46, 47).

2. Anlage nach Anspruch 1, **dadurch gekennzeichnet**, daß das Gehäuse (1) ein Gebläse-Segment (2) und ein Wärmeübertrager-Segment (3) aufweist, wobei dem Gebläse-Segment (2) das Gebläse (12) mit einem Gebläsemotor (9) und einem doppelseitigen Laufrad (11) zugeordnet ist, und daß das Gebläse-Segment (3) Gebläsewandungen mit einer radial in einer Mittelebene (4) des Laufrads (11) auf dasselbe zu laufenden Trennwand (23) zur Bildung einer auf der einer Seite der Mittelebene (4) erstreckenden Frischluftkammer (19) und zur Bildung einer auf der gegenüberliegenden Seite der Mittelebene (4) erstreckenden Umluftkammer (20).

3. Anlage nach Anspruch 1 oder 2, **dadurch gekennzeichnet**, daß das Laufrad (11) aus zwei koaxial zueinander angeordneten Radiallaufrädern besteht, die durch eine quer zu der Drehachse verlaufende Verbindungswand (18) miteinander fest verbunden sind, wobei die Verbindungswand (18) die Frischluftkammer (19) von der Umluftkammer (20) weitgehend luftdicht abschließt.

4. Anlage nach einem oder mehreren der Ansprüche 1 bis 3, **dadurch gekennzeichnet**, daß die Verbindungswand (18) mittig eine Bohrung aufweist zur Lagerung einer Antriebswelle (10) des Gebläsemotors (9).

5. Anlage nach einem oder mehreren der Ansprüche 1 bis 4, **dadurch gekennzeichnet**, daß das Gebläse-Segment (2) bezüglich der Mittelebene 4 symmetrisch ausgebildet ist.

6. Anlage nach einem oder mehreren der Ansprüche 1 bis 5, **dadurch gekennzeichnet**, daß das Gebläse-Segment (2) einen Gebläsewand-Abschnitt (6) aufweist, der zwei kreisringförmige U-Profile bildet, die sich im wesentlichen koaxial zu der Drehachse in der radialen Verlängerung jeweils eines Radiallaufrades erstrecken und die symmetrisch bezüglich der Mittelebene (4) ausgebildet sind, wobei die gemeinsamen Schenkel der U-Profile die radial nach innen verlaufende Trennwand (23) bilden zur Ausbildung einer mit dem Frischluft-Eingangsstutzen (25) korrespondierenden Frischluftkammer (19) und einer benachbarten zu dem Umluft-Eingangsstutzen (26) korrespondierenden Umluftkammer (20).

7. Anlage nach einem oder mehreren der Ansprüche 1 bis 6, **dadurch gekennzeichnet**, daß der Frischluft-Eingangsstutzen (25) und der Umluft-Eingangsstutzen (26) zu beiden Seiten einer durch die Trennwand (23) der Gebläse-Abschnitts (6) gebildeten Ebene in der Höhe versetzt zueinander angeordnet sind, derart, daß die Frischluft und die Umluft jeweils parallel zueinander von dem Frischluft-Eingangsstutzen (25) zu der Frischluftkammer (19) bzw. von dem Umluft-Eingangsstutzen (26) zu der Umluftkammer (20) geführt sind.

8. Anlage nach einem oder mehreren der Ansprüche 1 bis 7, **dadurch gekennzeichnet**, daß das Wärmeübertrager-Segment (3) mindestens eine quer zur Strömungsrichtung verlaufende Trennwand (42) aufweist zur Bildung des Frischluftkanals (24) und des Umluftkanals (27) innerhalb des Wärmeübertrager-Segments (2).

9. Anlage nach Anspruch 8, **dadurch gekennzeichnet**, daß die Trennwand (42) an einer Seitenwandung (43, 44) etwa mittig angeordnet ist und sich zwischen den Wärmeübertragern flächig von der Seitenwandung (43) zu der Seitenwandung (44) erstreckt, so daß im wesentlichen der Frischluftkanal (24) und der Umluftkanal (27) gleichgroß ausgebildet sind.

10. Anlage nach einem oder mehreren der Ansprüche 1 bis 9, **dadurch gekennzeichnet**, daß innerhalb des Wärmeübertrager-Segments (3) ein dem Umluftkanal (27) zugeordneter Bypasskanal (48) mit einer Steuerklappe (49) vorgesehen ist, derart, daß ein Teilstrom der Umluft unter Umgehung des Heizungswärmeübertragers (39) mindestens dem Ausgangsstutzen (46) zugeleitet wird.

11. Anlage nach einem oder mehreren der Ansprüche 1 bis 10, **dadurch gekennzeichnet**, daß dem Frischluftkanal (24) ausgangsseitig ein Defroster-Ausgangsstutzen (45) zugeordnet ist zur Ableitung der Frischluft zu einer Defrosterdüse.

12. Anlage nach einem oder mehreren der Ansprüche 1 bis 11, **dadurch gekennzeichnet**, daß dem Frischluftkanal 24 eingangsseitig zusätzlich ein Umluft-Eingangsstutzen (26) zugeordnet ist, so daß der Frischluftkammer (19) ein Mischstrom aus Frischluft und Umluft zugeführt wird.
